Europäisches Patentamt

European Patent Office

Office européen des brevets

(19)

(11) Veröffentlichungsnummer: **0 278 098**
**B1**

(12) **EUROPÄISCHE PATENTSCHRIFT**

(45) Veröffentlichungstag der Patentschrift:
18.04.90

(21) Anmeldenummer: 87118753.0

(22) Anmeldetag: 17.12.87

(51) Int. Cl.⁴: **B23K 11/24**, B23K 11/06

(54) **Widerstandsnahtschweissmaschine.**

(30) Priorität: 09.02.87 CH 446/87

(43) Veröffentlichungstag der Anmeldung:
17.08.88 Patentblatt 88/33

(45) Bekanntmachung des Hinweises auf die Patenterteilung:
18.04.90 Patentblatt 90/16

(84) Benannte Vertragsstaaten:
CH DE ES FR GB GR IT LI NL SE

(56) Entgegenhaltungen:
EP-A- 0 109 024
CH-A- 597 970
DE-A- 2 802 884
DE-A- 3 516 397
GB-A- 2 096 038
US-A- 1 971 217

(73) Patentinhaber: ELPATRONIC AG, Baarerstrasse 117,
CH-6300 Zug(CH)

(72) Erfinder: Frei, Matthias, Hardstrasse 35,
CH-5430 Wettingen(CH)
Erfinder: Mueller, Willi, Bahnhofstrasse 50,
CH-8965 Berikon(CH)
Erfinder: Sutter, Werner, Neuwiesenstrasse 9,
CH-5422 Oberehrendingen(CH)

(74) Vertreter: Hotz, Klaus, Dipl.-El.-Ing. / ETH, c/o
SOUDRONIC AG Industriestrasse 35 Postfach 11,
CH-8962 Bergdietikon(CH)

## Beschreibung

Die Erfindung betrifft eine Widerstandsnahtschweißmaschine, insbesondere zum Längsnahtschweißen von Dosenrümpfen, mit einem Schweißtransformator und mit einer aus Hin- und Rückleitung bestehenden Sekundärschleife mit einem Pendelrollenkopf, in welchem ein eine obere Elektrodenrolle tragender Pendelarm drehbar gelagert ist, mit einem eine untere Elektrodenrolle tragenden Unterarm, mit einer vom Schweißtransformator zum Pendelrollenkopf führenden ersten Stromschiene und mit einer vom Schweißtransformator zum Unterarm führenden zweiten Stromschiene.

Eine Widerstandsnahtschweißmaschine der vorgenannten Art ist bekannt ("Energieumsatz von der Schweißstelle bis zum Netz beim Widerstandsschweißen", W. Glage, Widerstandsschweißen III, Vorträge der 6. Stuttgarter Sondertagung Widerstands- Schweißtechnik 1965, Deutscher Verlag für Schweißtechnik (DVS) GmbH, Düsseldorf, 1965, S.53-69, insbesondere S.57). Infolge der hohen Stromstärken im Sekundärkreis solcher Nahtschweißmaschinen haben die - wenn auch sehr geringen - Induktivitäten und ohmschen Widerstände große Bedeutung, denn die an sich geringen, meist nur in Mikroohm auszudrückenden Werte der Impedanz führen durch Multiplikation mit dem Schweißstrom zu hohen Wirk- und Blindspannungsverlusten. Von entscheidendem Einfluß auf die Größe des Schweißstromes $I_2$ ist die geometrische Form der Sekundärschleife. Die geometrische Form der Sekundärschleife bestimmt die Induktivität derselben und damit - zusammen mit dem ohmschen Widerstand - die Sekundärimpedanz Z. Deren Multiplikation mit dem Schweißstrom $I_2$ ergibt den genannten Spannungsverlust ( $\Delta U = ZI_2$), der so groß sein kann, daß der Spannungsanteil, der von der Sekundär-Klemmenspannung noch am Schweißgut übrig bleibt, bestenfalls 1/4 bis 1/6 der Klemmenspannung ist. Zur Verringerung dieses Spannungsverlustes sind im Zusammenhang mit der bekannten Maschine (aaO, S. 57 und 58) als wichtigste Maßnahmen angegeben:

1. Sekundärschleife so klein wie möglich halten.
2. Möglichst gut leitende Werkstoffe verwenden.
3. Sekundärübergangswiderstände klein halten durch feste, saubere und ausreichend große Kontakte.
4. Keine Strömungsengpässe schaffen.
5. Auf Stromverdrängung achten.
6. Möglichst wenig magnetische Werkstoffe in den Bereich des Sekundärmagnetfeldes bringen.
7. Verlustströme (Nebenschlüsse) in den Werkstücken und Vorrichtungen vermeiden.

Als Beispiel ist für die bekannte Nahtschweißmaschine (aaO, Bild 6) angegeben, daß der induktive Widerstand der Nahtschweißmaschine durch andere Verlegung der Hinleitung zum oberen Nahtkopf um 50% verkleinert werden konnte. Die beim Widerstandsschweißen auftretenden Wechselströme hoher Stromstärke erfordern wie vorstehend erwähnt aber auch die Beachtung der Stromverdrängung (und der Wirbelströme). Einerseits sollte man wegen der günstigen geometrischen Form der Sekundärschleife Hin- und Rückleitung möglichst nahe zueinanderbringen, und andererseits müßte man wegen der Überlagerung der Magnetfelder beider Leitungen den Abstand möglichst groß wählen. Zwischen diesen beiden entgegengesetzten Forderungen gibt es einen bestimmten Abstand, bei dem zwischen steigendem Widerstand und fallender Induktivität ein Optimum liegt. Wenn man Hin- und Rückleitung des Stromes so weit voneinander entfernt anordnet, daß die Magnetfelder beider Leitungen nicht merklich aufeinander einwirken können, würde die Sekundärschleife zu groß. Ist der Abstand zwischen Hin- und Rückleitung klein, so tritt die einseitige Stromverdrängung auf, die auch als Nachbarschaftseffekt bezeichnet wird und durch die Überlagerung der Magnetfelder von Hin- und Rückleitung entsteht.

Weiter ist bei solchen Widerstandsnahtschweißmaschinen problematisch, daß elektrisch leitende Teile der Maschine, die überhaupt nicht Teil der Sekundärschleife sind, sich in dem Magnetfeld, das die Hin- und Rückleitung umgibt, stark erwärmen, und zwar durch Wirbelströme. Wenn der Schweißstrom eine übliche Frequenz von 500 Hz hat, kann die Erwärmung durch Wirbelströme beträchtliche Ausmaße annehmen. Dadurch können aus elektrisch gut leitendem Metall bestehende Teile in kürzester Zeit, z.B. einer Minute, Temperaturen von über 100°C erreichen. Solche Verlustwärme muß aus diesen Teilen wieder abgeführt werden, was beträchtliche Kühlprobleme mit sich bringt. Im Bereich der Sekundärschleife können sich aber Teile befinden, die überhaupt nicht kühlbar sind, beispielsweise Ketten mit daran angebrachten Transportklinken, die die Dosenrümpfe zur Schweißstelle zwischen den Elektrodenrollen transportieren. Um diese Probleme überhaupt nicht erst auftreten zu lassen, sind deshalb bei bekannten Widerstandsnahtschweissmaschinen zum Längsnahtschweissen von Dosenrümpfen die erste Stromschiene und der Unterarm in so grosser Entfernung voneinander angeordnet worden, dass eine nennenswerte Erwärmung der genannten Transportvorrichtungen nicht auftreten konnte, und unvermeidbar im Bereich der Magnetfelder von erster Stromschiene und Unterarm befindliche Maschinenteile wurden innen wirksam gekühlt. Das war aber mit dem Nachteil verbunden, dass die Forderung, die Sekundärschleife so klein wie möglich zu halten, nicht mehr erfüllt wurde.

Aufgabe der Erfindung ist es, bei einer Widerstandsnahtschweissmaschine der eingangs genannten Art den Spannungsverlust in der Sekundärschleife und die Erwärmung von diese umgebenden Teile auf einfache Weise beträchtlich zu verringern.

Diese Aufgabe ist bei einer Widerstandsnahtschweissmaschine der eingangs genannten Art erfindungsgemäss gelöst durch die kennzeichnenden Merkmale des Patentanspruchs 1.

Aus der DE-A 2 802 884 ist es in anderem Zusammenhang, nämlich bei der Zuleitung hoher Stromstärken zum Greifer (Schweisszange) eines Schweissroboters bekannt, einen Teil der Hin- und Rückleitung als Koaxialleitung auszubilden; es sind dabei zwei konzentrisch ineinander gesteckte Rohre vorgesehen, die gleichzeitig im Vor- und Rücklauf eines Kühlmittelkreislaufs integriert sind. Der Gesamtverlauf der Stromschleife bzw. deren geometrische Gestalt ist dabei nicht näher beschrieben.

Die Widerstandsnahtschweissmaschine nach der Erfindung hat aufgrund der parallelen Anordnung von Hin- und Rückleitung und der koaxialen Ausbildung über die Länge des Pendelarmes eine sehr kleine Sekundärschleife mit kleinen Leitungsabständen, bei der überdies die Tatsache ausgenutzt wird, dass bei einer Koaxialleitung ein Magnetfeld hauptsächlich im Inneren vorhanden und aussen bereits in kurzer Entfernung praktisch nicht mehr vorhanden ist. Durch die erfindungsgemässe Formgebung der Sekundärschleife wird nicht nur die Impedanz des Sekundärkreises verringert, sondern es werden auch die ausserhalb der Sekundärschleife entstehenden Wärmeverluste verringert, ohne dass die Bedienbarkeit der Maschine dadurch komplizierter wird. Der Bereich, in dem sich beim Längsnahtschweissen von Dosenrümpfen Transportklinken und dgl. bewegen, ist in etwa feldfrei, so dass sich diese nicht nennenswert erwärmen. Die Erwärmung ist umso geringer, je enger Hin- und Rückleitung einander angenähert sind.

Weiter unten im Zusammenhang mit der Beschreibung noch näher erläuterte Versuche haben gezeigt, dass gegenüber bekannten Widerstandsnahtschweissmaschinen zum Längsnahtschweissen von Dosenrümpfen der Spannungsverlust in der Sekundärschleife von etwa 7 bis 7,8 V/m auf etwa 2,6 bis 2,9 V/m, also um mehr als 50%, durch die Erfindung verringert werden konnte.

Vorteilhafte Ausgestaltungen der Erfindung bilden den Gegenstand der abhängigen Ansprüche 2 bis 10.

In der Ausgestaltung der Erfindung nach den Ansprüchen 2 und 3 wird durch die Koaxialanordnung von erster Stromschiene und darin beweglichem Pendelarm an einer besonders kritischen Stelle der Sekundärschleife der Spannungsverlust drastisch reduziert.

Durch die sich über einen Umfang von 360° erstreckende Stromübertragung mittels Strombändern von der ersten Stromschiene auf den Pendelrollenkopf ist nicht nur die geschlossene koaxiale Anordnung zwischen erster Stromschiene und Pendelrollenkopf einerseits und Pendelarm andererseits gewährleistet, sondern es ergibt sich (in Verbindung mit einer Stromübertragung vom Pendelrollenkopf auf den Pendelarm mittels Quecksilber) im Vergleich zu einseitiger oder punktweiser Stromübertragung auf den Pendelrollenkopf auch eine beträchtliche Erhöhung der Lebensdauer des letzteren, weil Temperaturkonzentrationen am Pendelarm wegen einseitiger Stromübertragung vermieden werden. Eine Temperaturkonzentration an dieser Stelle hätte auch den Nachteil, dass das Quecksilber mit dem umgebenden Kupfer eine Verbindung eingeht (Amalgamisation) und dadurch die Stromübertragung verschlechtert.

In der Ausgestaltung der Erfindung nach Anspruch 4 werden zwei ganz flache Leiter als erste bzw. zweite Stromschiene benutzt, die nahe beieinander angeordnet sind. Da auf diese Weise in diesem Bereich der Sekundärschleife sehr geringe Verluste auftreten, kann der Schweisstransformator entfernt vom Bedienungsfeld angeordnet werden, so dass er den Transport von Dosenrümpfen und dgl. und das Längsnahtschweissen derselben nicht behindert.

In der Ausgestaltung der Erfindung nach den Ansprüchen 5 bis 10 schafft die Aufteilung der ersten Stromschiene in mehrere Längsschienen die Möglichkeit, die Leitungsführung im Bereich des Unterarms in Anordnung und Wirkung einer Koaxialleitung anzunähern und dadurch auch Transportklinken und dgl. in einem im wesentlichen feldfreien Raum anordnen zu können. Dadurch lassen sich nicht nur die Forderungen nach kleinem Sekundärfenster und kleinen Leiterabständen erfüllen, sondern auch die Forderung, dass die dem Gegenleiter zugewandte Fläche möglichst gross sein soll.

Ausführungsbeispiele der Erfindung werden im folgenden unter Bezugnahme auf die Zeichnungen näher beschrieben. Es zeigt

Fig. 1 eine Ausführungsform einer Widerstandsnahtschweißmaschine nach der Erfindung, die zum Längsnahtschweissen von Dosenrümpfen vorgesehen ist,

Fig. 2 für die Widerstandsnahtschweißmaschine nach Fig. 1 den Schweißtransformator mit der Sekundärschleife,

Fig. 3 einen Teil der Sekundärschleife nach FIG. 2 in vergrößerter Darstellung,

Fig. 4 einen Teil der Sekundärschleife nach FIG. 2 in einer Längsschnittansicht, und

Fig. 5 Beispiele von bekannten und erfindungsgemäßen Anordnungen des Unterarms und des zu diesem parallel angeordneten Teils der ersten Stromschiene.

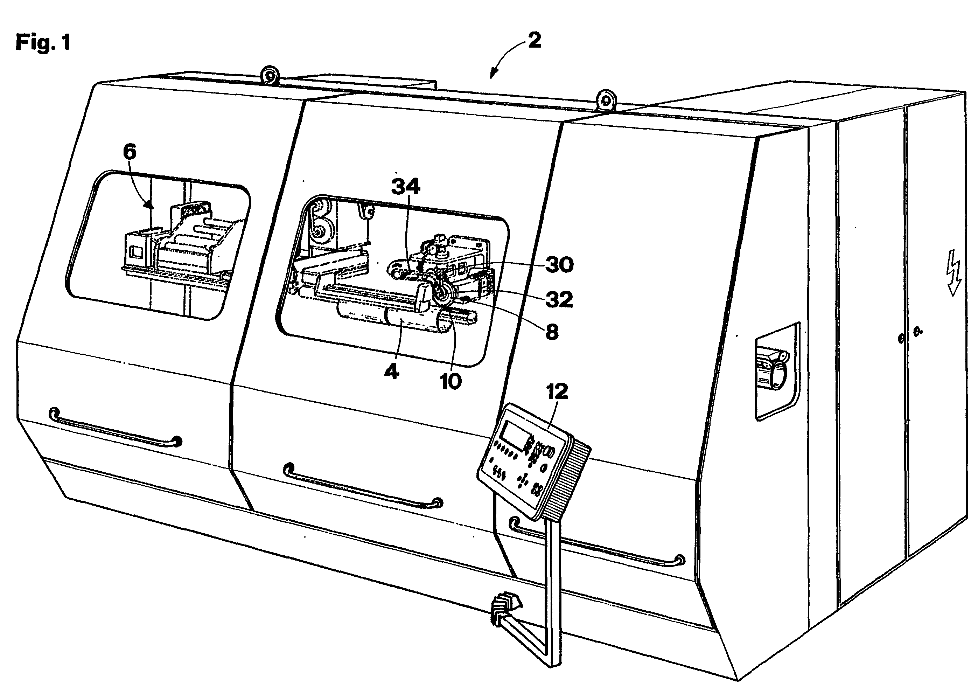

Fig. 1 zeigt eine Gesamtansicht einer Widerstandsnahtschweißmaschine 2 zum Schweißen von Dosenrümpfen 4. Zargen für die zu formenden Dosenrümpfe werden über eine Biege- und Richtstation 6 zugeführt, mittels ebenfalls nicht sichtbaren Führungsbacken in zylindrische Form gebracht, mittels einer ebenfalls nicht sichtbaren Z-Schiene an der Stelle der herzustellenden Längsnaht zur Überlappung gebracht und in diesem Zustand zur Längsnahtschweißung zwischen eine obere Elektrodenrolle 8 und eine untere Elektrodenrolle 10 mittels einer ebenfalls nicht sichtbaren, Transportklinken tragenden Transportkette eingeführt. All das ist bekannt, z.B. aus der auf die Anmelderin selbst zurückgehenden DE-OS 25 59 671, und braucht deshalb hier nicht näher beschrieben zu werden. Die Maschine wird mittels eines Bedienungstableaus 12 gesteuert, das nach Bedarf horizontal verschiebbar ist.

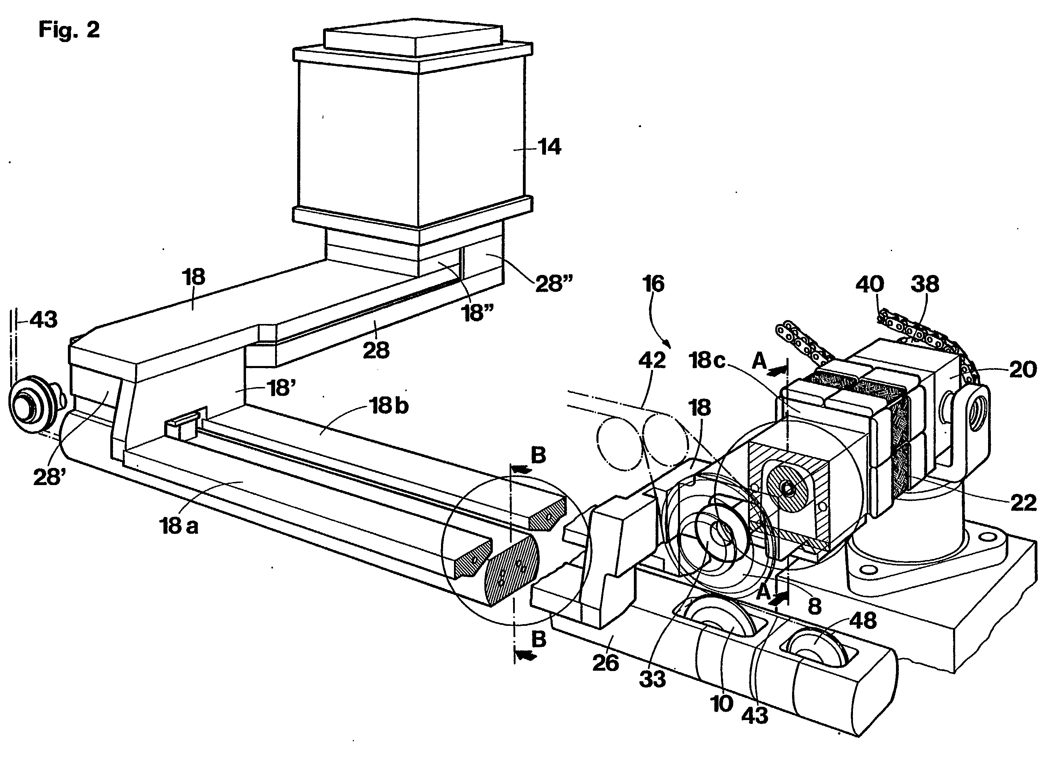

Fig. 2 zeigt als Einzelheit der Widerstandsnahtschweißmaschine 2 nach Fig. 1 deren Schweißtransformator 14 mit der aus Hin- und Rückleitung bestehenden Sekundärschleife 16. Die Hinleitung, d.h.

die zur oberen Elektrodenrolle 8 führende Leitung besteht aus einer ersten Stromschiene 18, einem Pendelrollenkopf 20, der mit dem ihm benachbarten Teil 18c der ersten Stromschiene 18 durch flexible Strombänder 22 auf weiter unten noch näher erläuterte Weise elektrisch leitend verbunden ist, und aus einem Pendelarm 24, der am einen Ende in dem Pendelrollenkopf 20 drehbar gelagert ist und am anderen Ende die obere Elektrodenrolle 8 trägt. Die Rückleitung, d.h. die von der unteren Elektrodenrolle 10 zurück zum Schweißtransformator 14 führende Leitung besteht aus einem an einem Ende die untere Elektrodenrolle 10 tragenden und am anderen Ende mit einer zweiten, zum Schweißtransformator 14 führenden Stromschiene 28 verbundenen Unterarm 26. In dem zwischen dem Schweißtransformator 14 und dem Unterarm 26 gelegenen Bereich der Sekundärschleife sind die erste Stromschiene 18 und die zweite Stromschiene 28 als parallele Leitung (sogen. Doppelleitung) verlegt und mit rechteckigem Querschnitt versehen, wie es in Fig. 2 dargestellt ist. Die Leitungsführung im übrigen Teil der Sekundärschleife ist weiter unten noch näher erläutert.

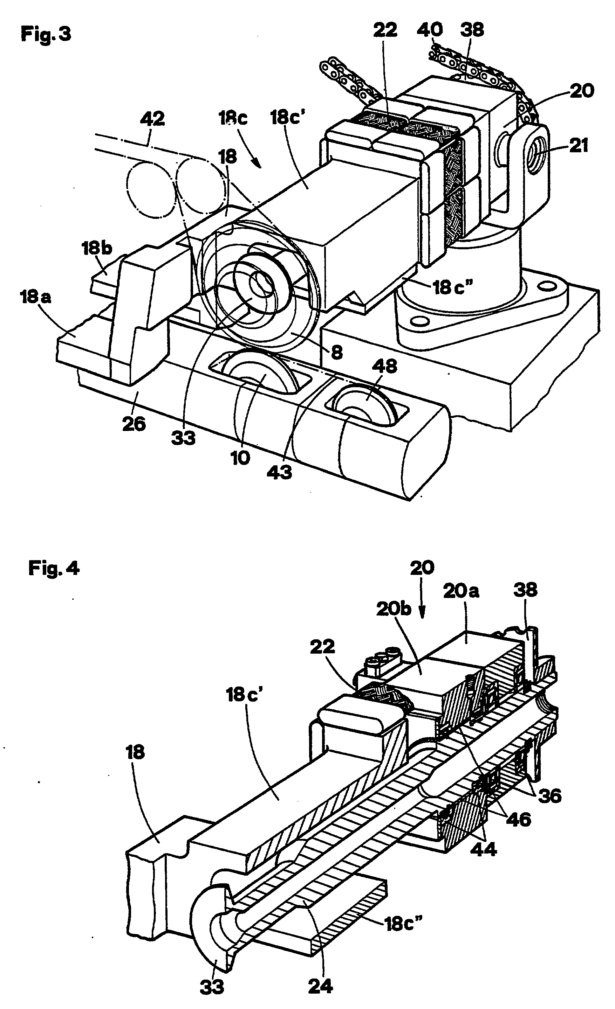

Fig. 3 zeigt ausführlicher den Pendelrollenkopf 20 und den mit diesem durch die Strombänder 22 verbundenen Teil 18c der ersten Stromschiene 18 und insbesondere die Pendellagerung 21 des Pendelrollenkopfes, die in Fig. 1 der Übersichtlichkeit halber weggelassen worden ist. Bei älteren Widerstandsnahtschweißmaschinen, wie beispielsweise bei der eingangs erwähnten, war der die obere Elektrodenrolle tragende Kopf sehr schwer und träge, weshalb die Schweißpunkte besonders am Anfang der Längsnaht unregelmäßig und nicht gut waren. Zur Vermeidung dieses Nachteils wird der nach dem Prinzip einer austarierten Waage aufgebaute Pendelrollenkopf benutzt, bei dem die Pendellagerung 21 das gesamte Gewicht trägt und die obere Elektrodenrolle 8 praktisch gewichtsfrei auf der unteren Elektrodenrolle 10 ruht. Zum Einstellen einer bestimmten Andrückkraft drückt eine Feder 30 (vgl. Fig. 1) von oben her auf die Achse 32 der oberen Elektrodenrolle. Die Achse 32 ist am Ende eines schwenkbar gelagerten Bügels 34 befestigt, der die obere Elektrodenrolle 8 vertikal und in Schweißrichtung führt. Der Pendelarm 24 ist als Hohlwelle ausgebildet (vgl. Fig. 4), die an einem Ende einen Tragflansch 33 für die Elektrodenrolle 8 hat und am anderen Ende in dem Pendelrollenkopf 20 mittels Wälzlagern 36 drehbar gelagert ist. An diesem anderen Ende des Pendelarms 24 ist ein Zahnkranz 38 befestigt, über den eine Kette 40 den Pendelarm 24 und damit die obere Elektrodenrolle 8 in Drehung versetzen kann. Gemäß Fig. 3 ist weiter über die obere Elektrodenrolle 8 eine Flachdrahtelektrode 42 geführt, die einen rechteckigen Querschnitt aufweist. Eine gleiche Flachdrahtelektrode 43 ist über die untere Elektrodenrolle 10 geführt. Die Flachdrahtelektrode 43 wird gemäß der Darstellung in Fig. 2 der unteren Elektrodenrolle 10 von links her zugeführt, geht oben nach rechts weiter über eine Zusatzrolle 48 und dann unten wieder in Richtung nach links zurück. Solche Flachdrahtelektroden dienen dem Zweck, die Verunreinigung der Elektrodenrolle durch das Eingehen einer Verbindung mit Metall des Schweißgutes (z.B. Zinn, wenn Dosenrümpfe aus Weißblech zu schweißen sind) zu verhindern, was aus der oben erwähnten DE-OS 25 59 671 und aus der ebenfalls auf die Anmelderin zurückgehenden DE-Patentschrift 35 16 397 bekannt ist und daher ebenfalls hier nicht weiter erläutert zu werden braucht.

Der Pendelrollenkopf 20 besteht aus zwei Hälften, nämlich der in Fig. 4 rechts dargestellten Hälfte 20a, die die Wälzlager 36 zur Lagerung des Pendelarms 24 enthält, und der in Fig. 4 links dargestellten Hälfte 20b, die zwischen zwei Dichtringen 44 eine Ringkammer 46 enthält, welche mit flüssigem Quecksilber gefüllt ist, das zur Stromübertragung vom Pendelrollenkopf 20 auf den Pendelarm 24 dient.

Gemäß der Darstellung in den Fig. 3 und 4 und gemäß der Schnittansicht A-A in Fig. 2 besteht der dem Pendelrollenkopf 20 benachbarte Teil 18c der ersten Stromschiene 18 aus einem im Querschnitt U-förmigen Teil 18c', das unten auf dem größten Teil seiner Länge durch eine Platte 18c" aus dem gleichen Werstoff wie das Teil 18c' verschlossen ist. Der Teil 18c' der ersten Stromschiene 18 und der Pendelrollenkopf 20 sind auf dem gesamten Umfang um den Pendelarm 24 durch die Strombänder 22 elektrisch leitend verbunden. Der Pendelarm ist daher auf seiner gesamten Länge durch die erste Stromschiene und den Pendelrollenkopf umschlossen. Lediglich die obere Elektrodenrolle 8 schaut aus dem im Querschnitt U-förmigen Teil 18c' hervor. Wenn der Pendelarm 24 eine Bewegung um die Pendellagerung 21 ausführt, geben die flexiblen Strombänder 22 entsprechend nach, so daß diese Bewegung des Pendelarms nicht behindert wird und dieser sich relativ zu dem stationären Teil 18c der ersten Stromschiene 18 frei bewegen kann. Der Teil 18c der ersten Stromschiene 18 und der Pendelrollenkopf 20 einerseits sowie der Pendelarm 24 andererseits sind daher im Verhältnis zueinander wie eine koaxiale Leitung angeordnet, in welcher der der oberen Elektrodenrolle 8 zugeführte Schweißstrom in dem Teil 18c in Fig. 4 nach rechts bis zum Quecksilber in der Ringkammer 46 fließt, über das Quecksilber in den Pendelarm 24 eintritt und in diesem in Richtung zur in Fig. 4 nicht dargestellten oberen Elektrodenrolle 8 fließt. In dieser Koaxialleitungsanordnung fließen also gegenphasige Ströme.

In dem Bereich zwischen dem Unterarm 26 und dem Schweißtransformator 14 haben die erste und die zweite Stromschiene 18 bzw. 28 einen flachen, breiten Querschnitt und sind mit einander benachbarten breiten Querschnittsseiten horizontal angeordnet. In der Darstellung in Fig. 2 links biegen sie rechtwinkelig nach oben um und sind vertikal in den Schweißtransformator 14 eingeführt. Dabei ist der gegenseitige Abstand der vertikal angeordneten Teile 18", 28" der Stromschienen gleich dem gegenseitigen Abstand der horizontal angeordneten Teile dieser Stromschienen, so daß überall zwischen Schweißtransformator 14 und Unterarm 26 die Forderung nach einem kleinen Abstand zwischen den gegenphasig vom Schweißstrom durchflossenen Stromschienen 18, 28 erfüllt ist.

Der Unterarm 26 hat gemäß der Darstellung in den Fig. 2 und 3 einen kreisförmigen, aber oben und unten abgeflachten Querschnitt. Die erste Stromschiene 18 führt vom unteren Ende des Schweißtransformators 14 zunächst horizontal nach links und biegt dann rechtwinkelig vertikal nach unten um, wobei Entsprechendes für den Verlauf der zweiten Stromschiene 28 in diesem Bereich gilt, lediglich mit dem Unterschied, dass ihr vertikal verlaufender Teil 28' parallel zur Längsachse des Unterarms 26 ist, wogegen der entsprechende vertikal verlaufende Teil 18' der ersten Stromschiene 18 rechtwinkelig zur Längsachse des Unterarms ist. In dem sich in Richtung zum Pendelarm 24 anschliessenden Bereich des Unterarms 26 ist die erste Stromschiene 18 in zwei Längsschienen 18a, 18b aufgeteilt, die auf einem um den Unterarm konzentrischen Kreis in engem Abstand von diesem angeordnet und vor der unteren Elektrodenrolle 10 wieder zur ersten Stromschiene 18 zusammengeführt sind, wobei dieser Zusammenführteil sich in dem Teil 18c fortsetzt, der wie oben dargelegt den Pendelarm 24 umschliesst. Die beiden Längsschienen 18a, 18b sind bezüglich einer vertikalen Längsmittelebene B-B des Unterarms 26 symmetrisch angeordnet. Bei der in Fig. 2 dargestellten Ausführungsform sind die Längsschienen 18a, 18b parallel zur oberen Querschnittsabflachung des Unterarms 26 angeordnet, und die Querschnittsform der Längsschienen 18a, 18b ist auf der dem Unterarm 26 benachbarten Seite an dessen Querschnittsform angepasst, wie es in der kreisförmig umrahmten Schnittansicht B-B in Fig. 2 ohne weiteres zu erkennen ist.

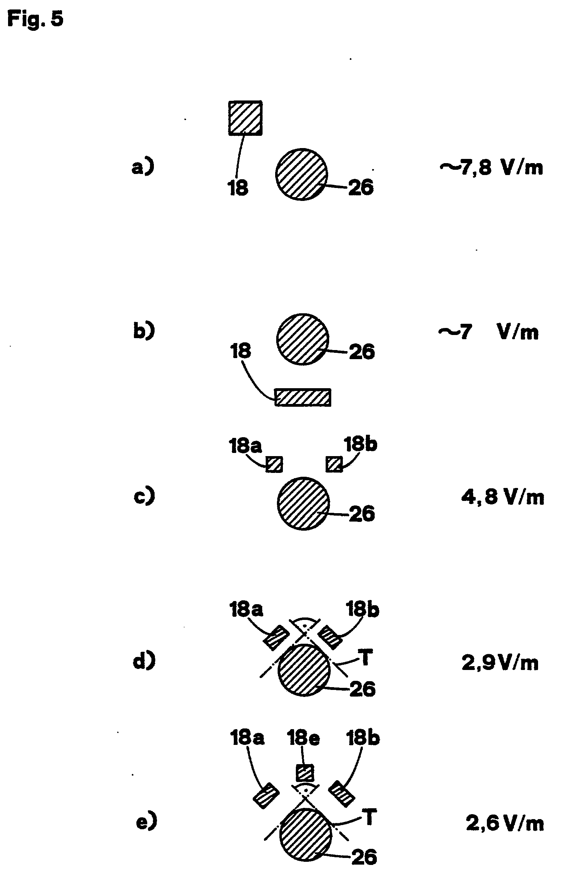

Für die Anordnung der dem Unterarm 26 benachbarten ersten Stromschiene 18 gibt es mehrere Möglichkeiten mit unterschiedlichen Spannungsverlusten, was schematisch in Fig. 5 dargestellt ist, wobei in Fig. 5 rechts jeweils die Spannungsverluste pro Meter angegeben sind, die sich mit der jeweiligen Ausführungsform ergeben. Die Fig. 5a und 5b zeigen zwei bekannte Anordnungen, die in älteren Widerstandsnahtschweissmaschinen der Anmelderin benutzt worden sind. Bei diesen bekannten Anordnungen hat die erste Stromschiene 18 relativ grossen Abstand vom Unterarm 26, wodurch ein Spannungsverlust von 7,8 bzw. 7 V/m auftritt. Fig. 5c zeigt eine Anordnung, die der erfindungsgemässen Anordnung gleicht, aber mit dem Unterschied, dass die Längsschienen 18a, 18b einen quadratischen statt rechteckigen Querschnitt haben und der Form des Unterarms 26 nicht angepaßt sind. Immerhin ergibt diese Anordnung bereits eine wesentliche Verringerung des Spannungsverlustes auf 4,8 V/m. In der Anordnung nach Fig. 5d sind die Längsschienen 18a, 18b parallel zu zwei sich unter 90° schneidenden Tangenten T des kreisförmigen Querschnittes des Unterarms 26 angeordnet, und in der Anordnung nach Fig. 5e ist zusätzlich noch eine dritte Längsschiene 18e vorgesehen, die mittig in der vertikalen Längsmittelebene B-B des Unterarms 26 angeordnet ist, wogegen die beiden anderen Längsschienen 18a, 18b wie in Fig. 5d symmetrisch zu der Längsmittelebene und wiederum parallel zu zwei sich unter 90° schneidenden Tangenten des kreisförmigen Querschnittes des Unterarms 26 angeordnet sind. Die Fig. 5d und 5e zeigen, daß eine Verringerung des Spannungsverlusts auf 2,9 bzw. 2,6 V/m erzielt wird. Mit der in Fig. 2 dargestellten Ausführungsform wird ein Spannungsverlust erzielt, der in der Größenordnung des Spannungsverlusts gemäß Fig. 5d liegt.

Die in der Schnittansicht B-B in Fig. 2 sichtbaren Bohrungen in den Längsschienen 18a, 18b und im Unterarm 26 sind Teile eines hier nicht näher beschriebenen Kühlwasserkreislaufs für die Elektrodenrollen 8, 10, die Zusatzrolle 48 und den Pendelrollenkopf 20.

## Patentansprüche

1. Widerstandsnahtschweissmaschine, insbesondere zum Längsnahtschweissen von Dosenrümpfen (4), mit einem Schweisstransformator (14) und mit einer aus Hin- und Rückleitung bestehenden Sekundärschleife (16) mit einem Pendelrollenkopf (20), in welchem ein eine obere Elektrodenrolle (8) tragender Pendelarm (24) drehbar gelagert ist, mit einem eine untere Elektrodenrolle (10) tragenden Unterarm (26), mit einer vom Schweisstransformator (14) zum Pendelrollenkopf (20) führenden ersten Stromschiene (18) und mit einer vom Schweisstransformator (14) zum Unterarm (26) führenden zweiten Stromschiene (28), dadurch gekennzeichnet, dass Hin- und Rückleitung der Sekundärschleife (16) im Bereich vom Schweisstransformator (14) bis vor dem Pendelrollenkopf (20) als im wesentlichen parallele, die erste Stromschiene (18) sowie die zweite Stromschiene (28) und den Unterarm (26) umfassende Leiter ausgebildet sind und dass der Pendelarm (24) auf seiner Länge vom Pendelrollenkopf (20) und einem an diesen stromleitend angeschlossenen Abschnitt (18c) der ersten Stromschiene (18) im wesentlichen koaxial umschlossen ist.

2. Widerstandsnahtschweissmaschine nach Anspruch 1, dadurch gekennzeichnet, dass der genannte Abschnitt (18c) der ersten Stromschiene und der Pendelrollenkopf (20) auf dem gesamten Umfang um den Pendelarm (24) durch Strombänder (22) elektrisch leitend verbunden sind.

3. Widerstandsnahtschweissmaschine nach Anspruch 1 oder 2, dadurch gekennzeichnet, dass der genannte Abschnitt (18c) der ersten Stromschiene einen ersten Teil (18c') mit U-förmigem Querschnitt und einen zweiten, die Enden der U-Schenkel überbrückenden Teil (18c'') aufweist.

4. Widerstandsnahtschweissmaschine nach einem der Ansprüche 1 bis 3, dadurch gekennzeichnet, dass die beiden Stromschienen (18, 28) im Bereich zwischen dem Unterarm (26) und dem Schweisstransformator (14) einen flachen, breiten, rechteckigen Querschnitt haben und mit einander benachbarten breiten Querschnittseiten horizontal angeordnet und anschliessend vertikal in den Schweisstransformator (14) eingeführt sind, wobei der gegenseitige Abstand der vertikal angeordneten Teile (18'', 28'') der Stromschienen (18, 28) gleich dem gegenseitigen Abstand der horizontal angeordneten Teile der Stromschienen ist.

5. Widerstandsnahtschweissmaschine nach einem der Ansprüche 1 bis 4, dadurch gekennzeichnet, dass der Unterarm (26) einen kreisförmigen, oben und unten abgeflachten Querschnitt aufweist und dass die erste Stromschiene (18) im Bereich des Unterarms (26) in mehreren Längsschienen (18a, 18b) aufgeteilt ist, die auf einem um den Unterarm (26) konzentrischen Kreis in engem Abstand zum Unterarm angeordnet und vor der unteren Elektrodenrolle (10) wieder zusammengeführt sind.

6. Widerstandsnahtschweissmaschine nach Anspruch 5, dadurch gekennzeichnet, dass die erste Stromschiene (18) in wenigstens zwei Längsschienen (18a, 18b) aufgeteilt ist, die bezüglich einer vertikalen Längsmittelebene des Unterarms (26) symmetrisch angeordnet sind.

7. Widerstandsnahtschweissmaschine nach den Ansprüchen 4 und 6, dadurch gekennzeichnet, dass die Längsschienen (18a, 18b) parallel zu einer der Querschnittsabflachungen des Unterarms (26) angeordnet sind.

8. Widerstandsnahtschweissmaschine nach Anspruch 7, dadurch gekennzeichnet, dass die Querschnittsform der Längsschienen (18a, 18b) auf der dem Unterarm (26) benachbarten Seite an dessen Querschnittsform angepasst ist (Fig. 2).

9. Widerstandsnahtschweissmaschine nach Anspruch 6, dadurch gekennzeichnet, dass die Längsschienen (18a, 18b) parallel zu zwei sich unter 90° schneidenden Tangenten (T) des kreisförmigen Querschnittes des Unterarms (26) angeordnet sind (Fig. 5d).

10. Widerstandsnahtschweissmaschine nach Anspruch 6, dadurch gekennzeichnet, dass die erste Stromschiene (18) in drei Längsschienen (18a, 18b) aufgeteilt ist, von denen eine mittig in der vertikalen Längsmittelebene des Unterarms (26) und die beiden anderen symmetrisch zu der Längsmittelebene und parallel zu zwei sich unter 90° schneidenden Tangenten (T) des kreisförmigen Querschnittes des Unterarms (26) angeordnet sind (Fig. 5e).

**Revendications**

1. Machine de soudage en ligne continue par résistance, notamment pour le soudage de lignes longitudinales de jonction de corps de boîtes (4), comportant un transformateur de soudage (14) et une boucle secondaire (16) constituée par un conducteur aller et un conducteur retour et comportant une tête porte-molette oscillante (20), dans laquelle un bras oscillant (24), qui porte une molette supérieure de soudage (8), est monté rotatif, un bras inférieur (26) portant une molette inférieure de soudage (10), un premier rail conducteur (18) reliant le transformateur de soudage (4) à la tête porte-molette oscillante (20), et un second rail conducteur (28) reliant le transformateur de soudage (14) au bras inférieur (26), caractérisée en ce que le conducteur, aller et le conducteur retour de la boucle secondaire (16) sont agencés, au voisinage du transformateur de soudage (14) et jusqu'en-deçà de la tête porte-molette oscillante (20), sous la forme de conducteurs sensiblement parallèles enveloppant le premier rail conducteur (18) ainsi que le second rail conducteur (28) et le bras inférieur (26), et que le bras oscillant (24) est entouré, d'une manière sensiblement coaxiale, sur sa longueur, par la tête porte-molette oscillante (20) et par une section (18c), raccordée à cette tête d'une manière électriquement conductrice, du premier rail conducteur (18).

2. Machine de soudage en ligne continue par résistance selon la revendication 1, caractérisée en ce que ladite section (18c) du premier rail conducteur et la tête porte-molette oscillante (20) sont reliées d'une manière électriquement conductrice par des tresses conductrices (22), sur la totalité de leur périphérie autour du bras oscillant (24).

3. Machine de soudage en ligne par résistance selon la revendication 1 ou 2, caractérisée en ce que ladite section (18c) du premier rail conducteur comprend une première partie (18c') possédant une section transversale en forme de U et une seconde partie (18c'') shuntant les extrémités de la branche en forme de U.

4. Machine de soudage en ligne continue par résistance selon l'une des revendications 1 à 3, caractérisée en ce que les deux rails conducteurs (18, 28) possèdent, dans la zone comprise entre le bras inférieur (26) et le transformateur de soudage (14), une section transversale plate, large et rectangulaire, et sont disposés de telle manière que les côtés larges, qui sont voisins, des sections transversales soient horizontaux, et sont introduits ensuite verticalement dans le transformateur de soudage (14), la distance réciproque entre les parties verticales (18'', 28'') des rails conducteurs (18, 28) étant égale à la distance réciproque entre les parties horizontales des rails conducteurs.

5. Machine de soudage en ligne continue par résistance selon l'une des revendications 1 à 4, caractérisée en ce que le bras inférieur (26) possède une section transversale circulaire, aplatie à sa partie supérieure et à sa partie inférieure, et que le premier rail conducteur (18) est subdivisé, au voisinage du bras inférieur (26), en plusieurs rails longitudinaux (18a, 18b), qui sont disposés à une faible distance du bras inférieur (26), sur un cercle concentrique à ce dernier et sont à nouveau réunis en amont de la molette inférieure de soudage (10).

6. Machine de soudage en ligne continue par résistance selon la revendication 5, caractérisée en ce que le premier rail conducteur (18) est subdivisé en au moins deux rails longitudinaux (18a, 18b), qui sont disposés symétriquement dans un plan médian longitudinal vertical du bras inférieur (26).

7. Machine de soudage en ligne continue par résistance selon les revendications 4 et 6, caractérisée en ce que les rails longitudinaux (18a, 18b) s'étendent parallèlement à l'une des parties aplaties de la section transversale du bras inférieur (26).

8. Machine de soudage en ligne continue par résistance selon la revendication 7, caractérisée en ce que la forme en coupe transversale des rails longitudinaux (18a, 18b) sur le côté voisin du bras inférieur (26) est adaptée à la forme en coupe transversale de ce bras (figure 2).

9. Machine de soudage en ligne continue par résistance selon la revendication 6, caractérisée en ce que les rails longitudinaux (18a, 18b) sont parallèles à deux tangentes (T), qui se croisent à angle droit, de la section transversale circulaire du bras inférieur (26) (figure 5d).

10. Machine de soudage en ligne continue par résistance selon la revendication 6, caractérisée en ce que le premier rail conducteur (18) est subdivisé en trois rails longitudinaux (18a, 18b), dont l'un est situé en position centrée dans le plan médian longitudinal vertical du bras inférieur (26) et dont les deux autres sont disposés symétriquement par rapport au plan médian longitudinal et sont parallèles à deux tangentes T, se recoupant à angle droit, de la section transversale circulaire du bras inférieur (26) (figure 5e).

**Claims**

1. A resistance seam welding machine, particularly for the longitudinal-seam welding of can bodies (4), having a welding transformer (14) and having a secondary loop (16) consisting of feed and return lines with a pendulum roller head (20) in which a pendulum arm (14) carrying an upper electrode roller (8) is mounted for rotation, having a lower arm (26) carrying a lower electrode roller, having a first busbar (18) leading from the welding transformer (14) to the pendulum roller head (20) and having a second busbar (28) leading from the welding transformer (14) to the lower arm (26), characterised in that the feed and return lines of the secondary loop (16) constructed, in the region from the welding transformer (14) to in front of the pendulum roller head (20), in the form of substantially parallel conductors comprising the first busbar (18) as well as the second busbar (28) and the lower arm (26), and that the pendulum arm (24) is surrounded substantially coaxially over its length by the pendulum roller head (20) and a portion (18c) of the first busbar connected to this in an electrically conducting manner.

2. A resistance seam welding machine according to Claim 1, characterised in that said portion (18c) of the first busbar and the pendulum roller head (20) are electrically connected through current leads (22) over the entire circumference round the pendulum arm (14).

3. A resistance seam welding machine according to Claim 1 or 2, characterised in that said portion (18c) of the first busbar comprises a first part (18c′) with a U-shaped cross-section and a second part (18c″) bridging the ends of the U-arms.

4. A resistance seam welding machine according to any one of Claims 1 to 3, characterised in that the two busbars (18, 28) have a flat, broad, rectangular cross-section in the region between the lower arm (26) and the welding transformer (14) and are disposed horizontally with broad sides of the cross-section adjacent to one another and are then introduced vertically into the welding transformer (14), and that the mutual spacing of the vertically arranged portions (18″, 28″) of the busbars (18, 28) is equal to the mutual spacing of the horizontally arranged portions of the busbars.

5. A resistance seam welding machine according to any one of Claims 1 to 4, characterised in that the lower arm (26) has a circular cross-section which is flattened at the top and bottom and that the first busbar (18) is divided, in the region of the lower arm (26), into a plurality of longitudinal bars (18a, 18b) which are arranged in a concentric circle round the lower arm (26) at a short distance from the lower arm and are joined together again before the lower electrode roller (10).

6. A resistance seam welding machine according to Claim 5, characterised in that the first busbar (18) is divided into at least two longitudinal bars (18a, 18b) which are disposed symmetrically with respect to a vertical longitudinal central plane of the lower arm (26).

7. A resistance seam welding machine according to Claims 4 and 6, characterised in that the longitudinal bars (18a, 18b) are disposed parallel to one of the flattened cross-sectional portions of the lower arm (26).

8. A resistance seam welding machine according to Claim 7, characterised in that the cross-sectional shape of the longitudinal bars (18a, 18b) is adapted, at the side adjacent to the lower arm (26), to the cross-sectional shape thereof (Figure 2).

9. A resistance seam welding machine according to Claim 6, characterised in that the longitudinal bars (18a, 18b) are disposed parallel to two tangents (T) of the circular cross-section of the lower arm (26), which tangents intersect one another at 90° (Figure 5d).

10. A resistance seam welding machine according to Claim 6, characterised in that the first busbar (18) is divided into three longitudinal bars (18a, 18b), one of which is disposed centrally in the vertical longitudinal central plane of the lower arm (26) and the other two are disposed symmetrically to the longitudinal central plane and parallel to two tangents (T) of the circular cross-section of the lower arm (26), which tangents intersect one another at 90° (Figure 5e).

**Fig. 1**

2

6

34

30

32

8

4

10

12

EP 0 278 098 B1

**Fig. 2**

14

18
43
28"
18"
28
28'
18'
18 b
18 a

16
42
18c
A
18
40 38
20
22
B
B
26
33
A
8
48
10 43

EP 0 278 098 B1

**Fig. 3**

**Fig. 4**

**Fig. 5**

a)  18  26  ~7,8 V/m

b)  18  26  ~7  V/m

c)  18a  18b  26  4,8 V/m

d)  18a  18b  T  26  2,9V/m

e)  18a  18e  18b  T  26  2,6V/m